# EUROPEAN PATENT APPLICATION

(11) **EP 2 650 152 A1**
(43) Date of publication of application: **16.10.2013**
(21) Application number: 11847172.1
(22) Date of filing: 29.11.2011
(51) Int. Cl.: B60H 1/00, B60H 1/12

(54) **AIR CONDITIONING DEVICE FOR VEHICLE**

(30) Priority: 06.12.2010 JP 2010271945
(71) Applicant: Keihin Corporation, Tokyo 163-0539 (JP)
(72) Inventor: KAIYAMA Koichi, Shioya-gun Tochigi 329-1233 (JP)
(74) Representative: Ilgart, Jean-Christophe
(86) International application number: PCT/JP2011/077545
(87) International publication number: WO 2012/077539

(57) **Abstract**

The present invention provides an air-conditioning device for a vehicle, including: a housing having, therein, a mixing zone in which a first airflow and a second airflow are mixed, and a plurality of air-distribution openings communicated with the mixing zone and including a first air-distribution opening and a second air-distribution opening; and an air-distribution adjusting damper which is movable in the mixing zone, and adjusts according to its position a ratio of air-distribution to the first air-distribution opening and the second air-distribution opening, in which the air-distribution adjusting damper includes a guide path that communicates part of the second airflow with the first air-distribution opening without mixing the part of the second airflow with the first airflow.

## Description

### Technical Field

The present invention relates to an air-conditioning device for a vehicle.
The present application claims priority based on Japanese Patent Application No. 2010-271945 filed in Japan on December 6, 2010, the disclosures of which are incorporated herein by reference in their entirety.

### Background Art

In general, an air-conditioning device for a vehicle cools supplied air with an evaporator to make cold air. Then, the ratio of heating applied to the cold air is adjusted to generate conditioned air.
More specifically, the air-conditioning device for a vehicle includes a housing (case) having the outer shape and a flow path formed therein. Further, the housing has two flow paths bifurcated therein, one flow path of which has a heater core. In the air-conditioning device for a vehicle, the volume of cold air supplied to the flow path provided with the heater core is adjusted to adjust the ratio of heating applied to the cold air.

Incidentally, the air-conditioning device for a vehicle needs to be installed to a limited space in a vehicle. Thus, it is difficult to increase the size of the air-conditioning device, and there is a demand for minimizing the size of air condition devices as much as possible. Further, the above-described housing has a reduced size, and hence, it is difficult to increase the size of the inside of the housing, in other words, the space for the flow path. The limited space within the housing described above means that the mixing zone of the cold air and the hot air is narrow. This leads to an insufficient mixing of the cold air and the hot air. The air-conditioning device for a vehicle includes at least two or more air-distribution openings (defroster opening, vent opening, and heat opening). When the cold air and the hot air are not sufficiently mixed in the air-conditioning device for a vehicle as described above, the temperatures of the conditioned air supplied from each of the air outlets into the room of the vehicle vary unintentionally.

To solve the problems described above, for example, Patent Document 1 proposes an air-conditioning device for a vehicle including a hot-air and cold-air mixing zone provided with an air blower guide having a path for a guiding part of the hot air to the air distributing opening without being mixed with the cold air. With this configuration, it is possible to suppress the variation in the conditioned air temperatures at each of the air-distribution openings.

### Related Art Documents

### Patent Documents

Patent Document 1: Japanese Unexamined Patent Application, First Publication No. 2009-227026
Patent Document 2: Japanese Unexamined Patent Application, First Publication No. 2004-189191

### Disclosure of the Invention

### Problems to be Solved by the Invention

In general, the air-conditioning device for a vehicle is provided with an air-distribution adjusting damper for adjusting a ratio of distribution into multiple air-distribution openings. As described in Patent Document 2, such an air-distribution adjusting damper is configured so as to be able to move in a zone for mixing the hot air and the cold air. This configuration for moving the air-distribution adjusting damper to adjust the ratio of air-distribution with the position of movement as described above is frequently employed in the air-conditioning device for a vehicle.
In the configuration described above, to install an air blower guide in the air-conditioning device for a vehicle in addition to the air-distribution adjusting damper, it is necessary to dispose the air blower guide at a position that does not interfere with the air-distribution adjusting damper. This necessitates increasing the space for the mixing zone, which inevitably leads to an increased size of a housing thereof.
Further, the air blower guide becomes resistant to the delivered air when the air blower guide is not necessary, for example, when only cold air is delivered to the vent opening, which leads to a reduction in the amount of air delivered.
Further, when the air blower guide is provided to the air-conditioning device for a vehicle in addition to the air-distribution adjusting damper, the air-distribution adjusting damper and the air blower guide have to be installed separately to the housing of the air-conditioning device. This leads to an increase in steps in an assembly work for the air-conditioning device for a vehicle.

The present invention has been made in view of the problems described above, and an object of the present invention is to provide an air-conditioning device for a vehicle having an air-distribution adjusting damper that can be moved in a mixing zone of a first airflow and a second airflow, which are different types from each other, without increasing the size of the air-conditioning device for a vehicle, without increasing the number of steps in assembly work, while reducing variation in temperatures of conditioned air.

### Means for Solving the Problems

The present invention employs the following configuration as the means for solving the problems.
[1] An air-conditioning device for a vehicle according to an aspect of the present invention includes: a housing having, therein, a mixing zone in which a first airflow and a second airflow are mixed, and a plurality of air-distribution openings communicated with the mixing zone and including a first air-distribution opening and a second air-distribution opening; and an air-distribution adjusting damper which is movable in the mixing zone, and adjusts according to its position a ratio of air-distribution to the first air-distribution opening and the second air-distribution opening, wherein the air-distribution adjusting damper includes a guide path that communicates part of the second airflow with the first air-distribution opening without mixing the part of the second airflow with the first airflow.

In the air-conditioning device for a vehicle according to [1] described above, when the air-distribution adjusting damper is moved to a position so as to make a ratio of air-distribution to the second air-distribution opening zero, the guide path may be located at an end portion of the mixing zone.

In the air-conditioning device for a vehicle according to [1] described above, when the air-distribution adjusting damper is moved to a position so as to distribute air to both the first air-distribution opening and the second air-distribution opening, one end of the guide path may be disposed so as to face the first air-distribution opening.

In the air-conditioning device for a vehicle according to [1] described above, the air-distribution adjusting damper may be a rotary damper.

In the air-conditioning device for a vehicle according to [4] described above, the air-distribution adjusting damper may include a flow-direction changing portion that changes the first airflow or the second airflow into a direction toward the air-distribution opening; and a guide plate that guides the second airflow, which flows in the vicinity of the guide path and in a guided direction of the guide path, to the flow-direction changing portion.

In the air-conditioning device for a vehicle according to [1] described above, the first airflow may be cold air, the second airflow may be hot air, and part of the first air-distribution opening may be a vent opening.

In the air-conditioning device for a vehicle according to [1] described above, the first airflow may be cold air, the second airflow may be hot air, and part of the first air-distribution opening may be a defroster opening.

### Effects of the Invention

According to the air-conditioning device for a vehicle of the aspect [1] described above, the air-distribution adjusting damper has a guide path that communicates part of the second airflow with the first air-distribution opening without mixing the part of the second airflow with the first airflow, which makes it possible to supply the part of the second airflow to the first air-distribution opening with the guide path even if the first airflow or the second airflow is insufficient in the first air-distribution opening. Further, it is not necessary to install any air blower guide separately from the air-distribution adjusting damper in the air-conditioning device for a vehicle. This makes it possible to reduce variation in temperatures of the conditioned air while suppressing an increase in the steps in the assembly work for the air-conditioning device for a vehicle and suppressing an increase in the size of the air-conditioning device for a vehicle.

Further, in the case of the aspect [2] described above, when all of the first airflow and the second airflow flow on the first air-distribution opening side, the guide path is located at the end portion of the mixing portion, whereby it is possible to minimize the increase in the resistance to air blow resulting from the existence of guide path.

Yet further, in the case of the aspect [3] described above, the one end of the guide path is disposed so as to face the first air-distribution opening, so that the second airflow discharged from the guide path can be supplied to the first air-distribution opening without hitting any obstacle. Thus, it is possible to reliably supply the second airflow to the first air-distribution opening by way of the guide path.

Yet further, in the case of the aspect [4] described above, it is possible to suppress the driving torque.

Yet further, in the case of the aspect [5] described above, the guide plate is provided in the vicinity of the guide path, so that the second airflow can be flowed smoothly into the flow-direction changing portion.

Yet further, in the case of the aspect [6] described above, even if the hot air supplied to the vent opening serving as part of the first air-distribution opening is insufficient and temperatures become low, it is possible to supply the hot air with the guide path without providing any air blower guide separately from the air-distribution adjusting damper. With this configuration, it is possible to suppress variation in temperatures of the conditioned air.

Yet further, in the case of the aspect [7] described above, even if the hot air supplied to the defroster opening serving as part of the first air-distribution opening is insufficient and temperatures become low, it is possible to supply the hot air with the guide path without providing any air blower guide separately from the air-distribution adjusting damper. With this configuration, it is possible to suppress variations in the temperatures of the conditioned air.

### Brief Description of the Drawings

FIG. 1 is a sectional view illustrating a schematic configuration of an air-conditioning device for a vehicle according to an embodiment of the present invention.
FIG. 2 is a perspective view illustrating a rotary damper in the air-conditioning device for a vehicle according to the embodiment.
FIG. 3 is a sectional view illustrating a schematic configuration of the air-conditioning device for a vehicle according to the embodiment, and further illustrating a state in which the rotary damper closes a heat opening.
FIG. 4 is a view illustrating the air-conditioning device for a vehicle according to this embodiment when viewed from the vent opening side.

### Embodiments of the Invention

Hereinbelow, with reference to the drawings, an embodiment of an air-conditioning device for a vehicle according to the present invention will be described. Note that, in the following drawings, the size of each element is changed as appropriate in order to make the elements recognizable.

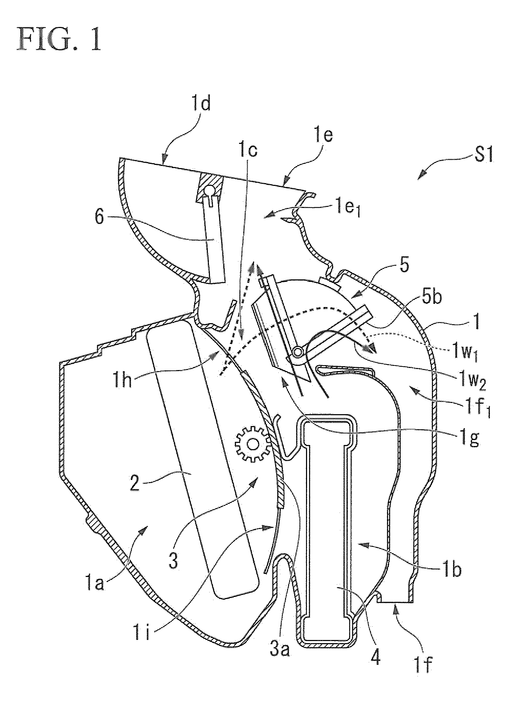

FIG. 1 is a sectional view illustrating a schematic configuration of an air-conditioning device S1 for a vehicle (HVAC: Heating Ventilation Air Conditioning) according to this embodiment. As illustrated in this drawing, the air-conditioning device S1 for a vehicle according to this embodiment includes a housing 1, an evaporator 2, an air-mixing damper device 3, a heater core 4, a rotary damper 5 (air-distribution adjusting damper), and a plate-type damper 6.

The housing 1 has the outer shape of the air-conditioning device S1 for a vehicle according to this embodiment. The housing 1 contains therein a cooling flow path 1a provided with an evaporator 2, a heating flow path 1b provided with a heater core 4, and a mixing portion 1c (mixing zone) for obtaining conditioned air by mixing cold air (first airflow) W₁ and hot air (second airflow) W₂. Further, the housing 1 has plural air-distribution openings exposed to the outside of the housing 1 and communicated with the mixing portion 1c. The air-distribution openings include, for example, a defroster opening 1d, a vent opening 1e, and a heat opening 1f.
The defroster opening (part of a first air-distribution opening) 1d is an air-distribution opening for supplying the conditioned air to a window. Further, the vent opening (part of the first air-distribution opening) 1e is an air-distribution opening for supplying the conditioned air to the face of a passenger. Further, the heat opening (second air-distribution opening) 1f is an air-distribution opening for supplying the conditioned air to a foot area of the passenger.

Further, as illustrated in FIG. 1, the housing 1 contains therein a hot air opening 1g for supplying the hot air W₂ toward the mixing portion 1c from the heating flow path 1b provided with the heater core 4, a cool air opening 1h for supplying the cold air W₁ toward the mixing portion 1c from the cooling flow path 1a provided with the evaporator 2, and a heating opening 1i for supplying the cold air W₁ toward the heating flow path 1b from the cooling flow path 1a.

The evaporator 2 serves as part of a refrigeration cycle provided to the vehicle, and is provided within the cooling flow path 1a. The evaporator 2 uses a blower (not illustrated) to cool air supplied into the cooling flow path 1a, thereby generating the cold air W₁.

The air-mixing damper device 3 is disposed on the downstream side of the evaporator 2. The air-mixing damper device 3 adjusts the amount of supply of the cold air W₁ generated by the evaporator 2 and supplied to the heating flow path 1b. More specifically, the air-mixing damper device 3 has an air-mixing damper 3a provided in a slidable manner between the cool air opening 1h and the heating opening 1i. The air-mixing damper 3a adjusts the ratio of opening between the cool air opening 1h and the heating opening 1i to adjust the amount of supply of the cold air W₁ to the heating flow path 1b. This makes it possible to adjust the ratio of mixing of cold air W₁ and the hot air W₂ in the mixing portion 1c, thereby adjusting temperatures of the conditioned air.

The heater core 4 is disposed within the heating flow path 1b. The heater core 4 heats the cold air W₁ supplied through the heating opening 1i, thereby generating the hot air W₂.

The rotary damper 5 is provided in the mixing portion 1c in a pivotal manner (movable manner). The rotary damper 5 adjusts the ratio of air-distribution toward the vent opening 1e and the ratio of air-distribution toward the heat opening 1f according to the angle of rotation (movement position). The member for moving the rotary damper 5 may be operated with a rack-and-pinion mechanism or other mechanism, rather than axial rotation. The member for moving the rotary damper 5 may include a rotational member and a position-changing member, or a combination thereof.

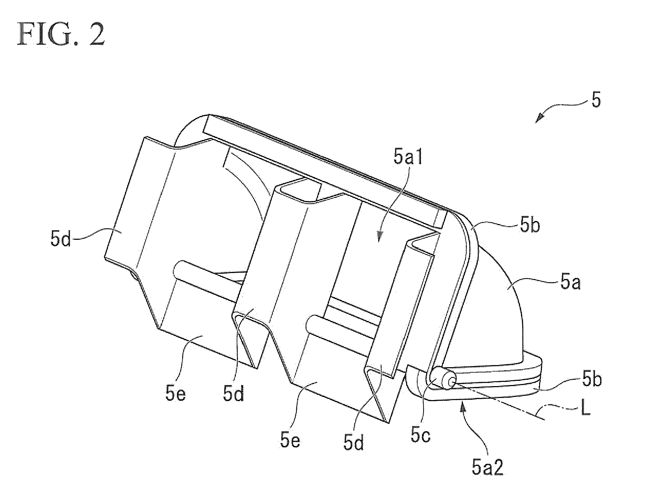

FIG. 2 is a perspective view illustrating the rotary damper 5. As illustrated in FIG. 2, the rotary damper 5 includes a shielding portion 5a (flow-direction changing portion), a seal portion 5b, a shaft portion 5c, a guide path 5d, and a guide plate 5e.

The shielding portion 5a is a hollow member, and has a fan shape when viewed from a direction of a rotational shaft L of the rotary damper 5. The shielding portion 5a shuts the flow path of a first airflow directing toward the vent opening 1e in the housing 1, or the flow path of a second airflow directing toward the heat opening 1f according to the angle of rotation of the rotary damper 5.
Further, both ends of the shielding portion 5a in the circumferential direction with the rotational axis L being a center are referred to as opening ends 5a₁, 5a₂. If the flow path directing toward the heat opening 1f is opened, the airflow entering the inside of the opening end 5a₁ or 5a₂ changes its flow direction to the direction toward the heat opening 1f and is supplied to the flow path toward the heat opening 1f.

The seal portion 5b is provided to edge portions at both ends of the shielding portion 5a and is brought into contact with the housing 1 to seal the airflow at the contacting area. Note that it is preferable that the seal portion 5b has a cushion material to alleviate the impact occurring at the time of bringing the seal portion into contact with the housing 1.
The shaft portion 5c is a bar-type member disposed so as to be aligned with the rotational shaft L. The shielding portion 5a, the seal portion 5b, the guide path 5d, and the guide plate 5e are supported by the shaft portion 5c while being pivotally supported by the housing 1.

It should be noted that, if the angle of rotation of the rotary damper 5 is set such that the seal portion 5b is not brought into contact with the housing 1 as illustrated in FIG. 1, both the flow path 1e₁ directing toward the vent opening 1e and the flow path 1f₁ directing toward the heat opening 1f are opened. With this configuration, it is possible to supply the conditioned air to both the vent opening 1e and the heat opening 1f.
It should be noted that, in the following description, a position of the rotary damper 5 in a state where the conditioned air can be supplied to both the vent opening 1e and the heat opening 1f (in a state where the housing 1 is not brought into contact with the seal portion 5b) is referred to as an intermediate position.

The guide path 5d illustrated in FIG. 2 is a path that communicates the mixing portion 1c and the vent opening 1e when the rotary damper 5 is in the intermediate position. With this guide path 5d, when the rotary damper 5 is in the intermediate position, part of the hot air W₂ supplied from the hot air opening 1g to the mixing portion 1c is guided toward (communicated with) the vent opening 1e without being mixed with the cold air W₁.
As illustrated in FIG. 2, the guide path 5d is provided adjacently to the outside of the opening end 5a₁ disposed on the evaporator 2 side of the shielding portion 5a. Further, the guide path 5d is disposed over the shaft portion 5c and the seal portion 5b. In this embodiment, three guide paths 5d are provided in a manner such that they are arranged so as to be parallel to each other.

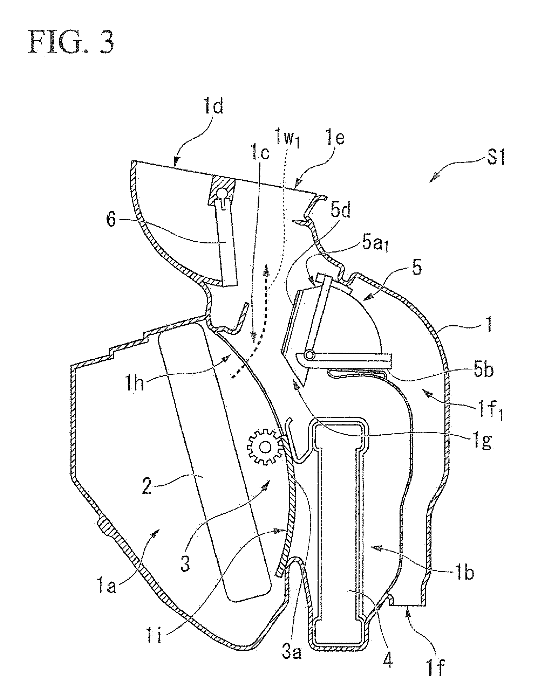

It should be noted that, as illustrated in FIG. 3, when the rotary damper 5 moves to a position that closes the flow path 1f₁ directing toward the heat opening 1f to make the ratio of air-distribution toward the heat opening 1f zero, the opening end 5a₁ of the guide path 5d is positioned at the end portion of the mixing portion 1c.
In other words, the guide path 5d provided adjacently to the opening end 5a₁ is located at the end portion of the mixing portion 1c when the rotary damper 5 is located at the position that makes the ratio of air-distribution toward the heat opening 1f zero.

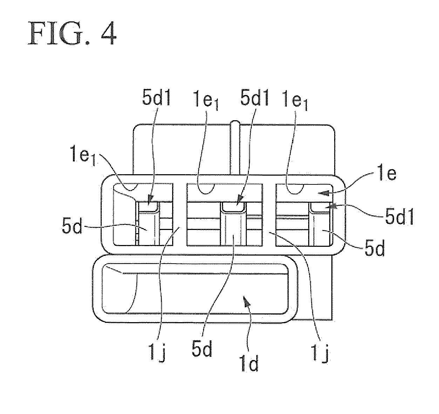

Further, in the air-conditioning device S1 for a vehicle according to this embodiment, when the rotary damper 5 is in the intermediate position as illustrated in FIG. 4 (diagram illustrating the housing 1 that is viewed from the vent opening 1e side), each of the guide path ends 5d₁ (one end of the rotary damper 5d) is located at a position that can be viewed from the vent opening 1e when the vent opening 1e is viewed from the outside. In other words, when the rotary damper 5 is moved to a position for distributing air to the vent opening 1e and the heat opening 1f, the guide path end 5d₁ is disposed so as to face the vent opening 1e.
This configuration will be specifically described. The vent opening 1e is partitioned by multiple ribs 1j straddling the vent opening 1e to provide plural openings 1e₂. Further, on the inner side of the ribs 1j, a duct, not-illustrated, is connected for each of the openings 1e₂. Each of the guide path ends 5d₁ is disposed so as to be exposed to the opening 1e₂ (so as to be viewed from the outside of the opening 1e) when the vent opening 1e is viewed from the outside.

With reference to FIG. 2, the guide plate 5e will be described. The guide plate 5e is provided between the guide paths 5d. This guide plate 5e guides the hot air W₂ flowing in the direction guided by the guide path 5d in the vicinity of the guide path 5d to the shielding portion 5a.
It should be noted that, to smoothly guide the hot air W₂ to the shielding portion 5a, the air-conditioning device S1 for a vehicle according to this embodiment includes the guide plate 5e disposed on the upper stream side of the hot air W₂ upper than the shaft portion 5c.

With reference to FIG. 1, the plate-type damper 6 will be described. The plate-type damper 6 is provided to open and close the defroster opening 1d, and is disposed in the middle of the flow path and downstream on the vent opening 1e side lower than the rotary damper 5. By pivoting (moving) the plate-type damper 6, the defroster opening 1d opens, and part of the conditioned air directing toward the vent opening 1e is supplied to the defroster opening 1d.
It should be noted that the plate-type damper 6 is configured so as to be able to close the vent opening 1e. With the vent opening 1e being closed by the plate-type damper 6, all the conditioned air directing toward the vent opening 1e is supplied to the defroster opening 1d.

It should be noted that the air-mixing damper device 3, the rotary damper 5, and the plate-type damper 6 are driven by one or more motors, not illustrated.

In the air-conditioning device S1 for a vehicle according to this embodiment having a configuration as described above, by opening both the cool air opening 1h and the heating opening 1i with the air-mixing damper device 3, air supplied to the cooling flow path 1a is cooled with the evaporator 2 to be the cold air W₁. Then, part of the cold air W₁ is supplied to the heating flow path 1b.
In the heating flow path 1b, the heater core 4 heats to generate the hot air W₂. This hot air W₂ is supplied from the hot air opening 1g to the mixing portion 1c. Then, the cold air W₁ not supplied to the heating flow path 1b is supplied from the cool air opening 1h to the mixing portion 1c.
The cold air W₁ and the hot air W₂ supplied to the mixing portion 1c are mixed to be the conditioned air, which is supplied into the vehicle room from any of the opened openings including the defroster opening 1d, the vent opening 1e, and the heat opening 1f.

The air-conditioning device S1 for a vehicle according to this embodiment is provided with the rotary damper 5 that can adjust, according to its positions, the ratio of air-distribution toward the plural air-distribution openings including the first air-distribution opening (defroster opening 1d, vent opening 1e) and the second air-distribution opening (heat opening 1f), each of which is communicated with the mixing portion 1c in which the cold air W₁ and the hot air W₂ are mixed. The rotary damper 5 is provided with the guide path 5d that guides part of the hot air W₂ toward the vent opening 1e without mixing the hot air W₂ with the cold air W₁ in the mixing portion 1c.
Thus, although, in the conventional art, when the rotary damper 5 is in the intermediate position, the hot air W₂ supplied to the vent opening 1e becomes insufficient and temperatures are more likely to be low, the air-conditioning device S1 for a vehicle according to this embodiment can supply this insufficient hot air W₂ to the vent opening 1e with the guide path 5d without having any air blower guide provided separately from the rotary damper 5. This makes it possible to suppress variation in temperatures of the conditioned air.
Further, in the air-conditioning device S1 for a vehicle according to this embodiment, part of the conditioned air directing toward the vent opening 1e is distributed to the defroster opening 1d with the plate-type damper 6. With this configuration, the air-conditioning device S1 for a vehicle of this embodiment can supply the hot air W₂ to the defroster opening 1d with the guide path 5d, similar to the air blow to the vent opening 1e, without having any air blower guide provided separately from the rotary damper 5. This makes it possible to suppress variation in temperatures of the conditioned air.
As described above, according to the air-conditioning device S1 for a vehicle of this embodiment, the air blower guide is not necessary to be provided at portions other than the rotary damper 5. Thus, it is possible to suppress variations in temperatures of the conditioned air without increasing the size of the air-conditioning device S1 for a vehicle and without increasing the number of steps in the assembly work.

Further, in the air-conditioning device S1 for a vehicle according to this embodiment, the rotary damper 5 is provided in a manner such that the guide path 5d is positioned at the end portion of the mixing portion 1c when the ratio of air-distribution toward the heat opening 1f is made zero.
As described above, when the rotary damper 5 makes zero the ratio of air-distribution toward the heat opening 1f, all the hot air W₂ and the cold air W₁ flow toward the vent opening 1e and the defroster opening 1d. At this time, if the guide path 5d is located at the center of the mixing portion 1c, the resistance to air blow increases. However, in the air-conditioning device S1 for a vehicle according to this embodiment, the guide path 5d is located at the end portion of the mixing portion 1c when the rotary damper 5 makes zero the ratio of air-distribution toward the heat opening 1f, which makes it possible to minimize the increase in the resistance to the air blow resulting from the guide path 5d.

Further, in the air-conditioning device S1 for a vehicle according to this embodiment, when the rotary damper 5 is in the intermediate position, each of the guide path ends 5d₁ is arranged so as to face the vent opening 1e.
With this configuration, the hot air W₂ discharged from the guide path 5d is supplied to the vent opening 1e without hitting any obstacles. Thus, it is possible to reliably supply the hot air W₂ through the guide path 5d to the vent opening 1e.

Further, in this embodiment, there is provided the guide plate 5e that guides, toward the shielding portion 5a, the hot air W₂ flowing in the vicinity of the guide path 5d and in the guided direction of the guide path 5d.
Thus, when the rotary damper 5 is in the intermediate position, the hot air W₂ can be made flow smoothly into the inside of the shielding portion 5a. This makes it possible to make the flow of the hot air W₂ toward the heat opening 1f more smoothly.

The preferred embodiment of the present invention has been described with reference to the attached drawings. However, the present invention is not limited to the above-described embodiment. Shapes and combinations of constituent elements described in the embodiment are merely examples, and it may be possible to employ various modifications based on design requirements, provided that they do not deviate from the scope of the present invention.

For example, in the above-described embodiment, the configuration in which the hot air W₂ is supplied to the vent opening 1e and the defroster opening 1d with the guide path 5d has been described.
However, the present invention is not limited to this. It may be possible to employ a configuration in which the cold air W₁ is supplied to the heat opening 1f with the guide path 5d.

Further, in the embodiment described above, description has been made of a configuration in which the air-distribution adjusting damper according to the present invention is the rotary damper 5.
However, the present invention is not limited to this. It may be possible to employ a plate-type damper as the air-distribution adjusting damper.
It is preferable to employ a rotary damper that can move in a direction perpendicular to the flowing direction of the airflow because this configuration makes it possible to reduce the driving torque.

### Reference Signs List

- S1: Air-conditioning device for a vehicle
- 1: Housing
- 1c: Mixing portion (mixing zone)
- 1d: Defroster opening (first air-distribution opening)
- 1e: Vent opening (first air-distribution opening)
- 1e₁: Flow path
- 1e₂: Opening
- 1f: Heat opening (second air-distribution opening)
- 1f₁: Flow path
- 5: Rotary damper (air-distribution adjusting damper)
- 5a: Shielding portion (flow-direction changing portion)
- 5a₁, 5a₂: Opening end
- 5b: Seal portion
- 5d: Guide path
- 5d₁: Guide path end
- W₁: Cold air
- W₂: Hot air

## Claims

1. An air-conditioning device for a vehicle, comprising:
a housing having, therein, a mixing zone in which a first airflow and a second airflow are mixed, and a plurality of air-distribution openings communicated with the mixing zone and including a first air-distribution opening and a second air-distribution opening; and
an air-distribution adjusting damper which is movable in the mixing zone, and adjusts according to its position a ratio of air-distribution to the first air-distribution opening and the second air-distribution opening, wherein
the air-distribution adjusting damper includes a guide path that communicates part of the second airflow with the first air-distribution opening without mixing the part of the second airflow with the first airflow.

2. The air-conditioning device for a vehicle according to Claim 1, wherein
when the air-distribution adjusting damper is moved to a position so as to make a ratio of air-distribution to the second air-distribution opening zero, the guide path is located at an end portion of the mixing zone.

3. The air-conditioning device for a vehicle according to Claim 1, wherein
when the air-distribution adjusting damper is moved to a position so as to distribute air to both the first air-distribution opening and the second air-distribution opening, one end of the guide path is disposed so as to face the first air-distribution opening.

4. The air-conditioning device for a vehicle according to Claim 1, wherein
the air-distribution adjusting damper is a rotary damper.

5. The air-conditioning device for a vehicle according to Claim 4, wherein
the air-distribution adjusting damper comprises:
a flow-direction changing portion that changes the first airflow or the second airflow into a direction toward the air-distribution opening; and
a guide plate that guides the second airflow, which flows in the vicinity of the guide path and in a guided direction of the guide path, to the flow-direction changing portion.

6. The air-conditioning device for a vehicle according to Claim 1, wherein
the first airflow is cold air;
the second airflow is hot air; and
part of the first air-distribution opening is a vent opening.

7. The air-conditioning device for a vehicle according to Claim 1, wherein
the first airflow is cold air;
the second airflow is hot air; and
part of the first air-distribution opening is a defroster opening.
